# FASCICULE DE BREVET EUROPEEN

(11) **EP 2 310 327 B1**
(45) Date de publication et mention de la délivrance du brevet: **07.11.2012**
(21) Numéro de dépôt: 09781136.8
(22) Date de dépôt: 27.07.2009
(51) Int. Cl.: C02F 1/44, B01D 61/02, C02F 1/66, C02F 5/00, C02F 103/08

(54) **PROCEDE DE TRAITEMENT D'EAU PAR OSMOSE INVERSE INCLUANT UNE DECARBONATATION D'UN CONCENTRAT ET UNE REMINERALISATION D'UN FILTRAT**
UMKEHROSMOSEVERFAHREN ZUR WASSERBEHANDLUNG MIT ENTKARBONISIERUNG EINES KONZENTRATS UND REMINERALISIERUNG EINES FILTRATS
REVERSE OSMOSIS WATER TREATMENT PROCESS THAT INCLUDES A DECARBONATION OF A CONCENTRATE AND A REMINERALIZATION OF A FILTRATE

(30) Priorité: 31.07.2008 FR 0855309
(43) Date de publication de la demande: 20.04.2011
(73) Titulaire: Veolia Water Solutions & Technologies Support, 94417 Saint-Maurice Cedex (FR)
(72) Inventeur: GAID, Abdelkader, F-75014 Paris (FR); DELAGARDE, Sébastien, F-94700 Maisons-Alfort (FR)
(74) Mandataire: Larcher, Dominique
(86) Numéro de dépôt international: PCT/EP2009/059676
(87) Numéro de publication internationale: WO 2010/012691

(56) Documents cités:
- WO-A-02/00551
- WO-A-2006/022719
- JP-A- 2008 043 868
- US-A- 6 113 797
- KHAWAJI ET AL: "Advances in seawater desalination technologies" DESALINATION, ELSEVIER, AMSTERDAM, NL, vol. 221, no. 1-3, 19 janvier 2008 (2008-01-19), pages 47-69, XP022426541 ISSN: 0011-9164

## Description

### 1. Domaine de l'invention

Le domaine de l'invention est celui du traitement de l'eau. Plus précisément, l'invention se rapporte au traitement de l'eau notamment de l'eau de mer, en vue de son dessalement.

### 2. Art antérieur

Le dessalement de l'eau de mer est une pratique qui est couramment mise en oeuvre dans le but d'abattre la concentration des différents sels dissous dans l'eau. À cet effet, il est connu de filtrer de l'eau riche en sels à travers des membranes de type osmose inverse. Ce type de filtration par osmose inverse peut être appliqué à tout type d'eau contenant des sels telle que l'eau de mer.

Ce type de traitement par osmose inverse s'avère être particulièrement efficace en ce qu'il permet la production d'une eau épurée (ou filtrat) dont la concentration en sels est considérablement amoindrie. Ceci apparaît clairement dans les colonnes du tableau 1 qui illustre les résultats du traitement d'une eau de mer par osmose inverse avec un taux de conversion égale à 52,8%. En osmose inverse ou en nanofiltration, le taux de conversion peut être défini comme étant égal au rapport (en %) entre le débit de perméat et le débit d'alimentation de l'unité de filtration.

**Tableau 1 : résultats du traitement d'une eau de mer par osmose inverse avec un taux de conversion de 52,8%.**

| **Paramètres** | **Eau de mer** | **Eau dessalée (osmose inverse)** | **Concentrat** |
|---|---|---|---|
| **Cations (mg/l)** | | | |
| Ca²⁺ | 444,4 | 0,15 | 840,1 |
| Mg²⁺ | 1382,7 | 0,47 | 2616,3 |
| Ba²⁺ | 1,10 | 0,1 | 1,9 |
| Na²⁺ | 12221,5 | 19,6 | 23056,6 |
| K⁺ | 416,1 | 0,85 | 784,3 |
| Sr⁺ | 4,94 | 0,1 | 9,34 |

| Anions **(mg/l)** | | | |
|---|---|---|---|
| C⁻ | 21754 | 32,10 | 41046,02 |
| SO₄²⁻ | 2963,2 | 0,40 | 5610,26 |
| HCO₃⁻ | 168,4 | 0,38 | 311,29 |
| CO₃²⁻ | 3,5 | 0,000 | 9,49 |
| NO₃⁻ | 1,0 | 0,00 | 1,87 |
| Bore | 5,4 | 0,35 | 9,06 |
| F⁻ | 1,5 | 0,02 | 2,80 |

Il peut en effet être constaté que les concentrations en différents sels présents initialement dans l'eau de mer sont considérablement réduites dans l'eau dessalée obtenue après traitement par osmose inverse. Selon les espèces en présence, ces concentrations peuvent atteindre des valeurs proches de zéro.

Toutefois, le dessalement par osmose inverse, s'il est particulièrement efficace, n'est pas exempt d'inconvénients.

### 3. Inconvénients de l'art antérieur

Notamment, le dessalement de l'eau par osmose inverse n'est pas un traitement sélectif en sorte que l'eau produite se trouve être appauvrie en de nombreux sels. Toutefois, si le dessalement de l'eau vise bien entendu à réduire la concentration en sels de l'eau, il vise plus particulièrement à réduire les concentrations de certains de ces sels de façon à adoucir l'eau. Notamment, le dessalement de l'eau vise à limiter la concentration de l'eau en chlorure de sodium afin d'ôter son goût salée à l'eau de mer et de la rendre propre à la consommation, ou plus simplement de la rendre exploitable.

En d'autres termes, l'eau traitée issue du dessalement se trouve être appauvrie en certains sels tels que les bicarbonates, alors que leur présence s'avère nécessaire.

Afin de pallier cet inconvénient, il est courant de procéder à une reminéralisation de l'eau traitée en vue de l'enrichir en certains sels. Plusieurs techniques ont été développées dans ce dessein.

Une première technique de reminéralisation consiste à injecter dans l'eau traitée de l'anhydride carbonique (CO₂) et de la chaux (CaO) ce qui conduit à la formation de bicarbonates de calcium (Ca(HCO₃)₂) dans l'eau traitée.

Une deuxième technique de réminéralisation consiste à faire transiter l'eau traitée sur un matériau calcaire après y avoir injecté un acide (voir par example la demande de brevet japonaise JP2008043868A). Le matériau calcaire utilisé à cet effet peut par exemple présenter des caractéristiques telles que celles qui figurent dans le tableau 2. Il peut notamment être d'origine terrestre, ou formé naturellement par l'évaporation des sels marins sur sites côtiers.

**Tableau 2 : exemple de caractéristiques d'un matériau calcaire classique**

| **Paramètres** | **%** |
|---|---|
| CaCO₃ | ≥ 80 |
| MgO | ≥ 14,5 |
| SiO₂ | 0,3 |
| Al2O₃ | 0,05 |
| SO₄²⁻ | 0,2 |
| Fe₂O₃ | traces |

| **Métaux** | **mg/kg** |
|---|---|
| Arsenic | 0,25 |
| Cadmium | < 0,25 |
| Chrome | < 2 |
| Mercure | < 0,02 |
| Plomb | 0,25 |
| Sélénium | 0,9 |

| **Caractéristiques physiques** | |
|---|---|
| Dureté (Mohs) | 3 |
| Densité apparente | > 1,02 |

L'injection d'anhydride carbonique (CO₂) et la circulation de l'eau sur un matériau calcaire s'accompagne de la réaction suivante :

CaCO₃ + CO₂ + H₂O → Ca(HCO₃)₂

L'injection d'acide sulfurique (H₂SO₄) et la circulation de l'eau sur un matériau calcaire s'accompagne de la réaction suivante :

2CaCO₃ + H₂SO₄ → Ca(HCO₃)₂ + CaSO₄

L'injection d'acide chlorhydrique (HCl) et la circulation de l'eau sur un matériau calcaire s'accompagne de la réaction suivante :

2CaCO₃ + 2HCl → Ca(HCO₃)₂ + CaCl₂

Ces techniques de reminéralisation sont particulièrement efficaces en ce qu'elles permettent d'enrichir l'eau traitée en calcium et en bicarbonates. Elles présentent toutefois quelques inconvénients.

Au rang de ces inconvénients figurent le fait que le matériau calcaire utilisé selon cette deuxième technique pour reminéraliser l'eau traitée est consommé lors de la réaction de reminéralisation. Il constitue en ce sens un matériau consommable qui doit être en permanence renouvelé. Ceci implique que le site sur lequel l'eau est traitée soit régulièrement approvisionné en ce matériau consommable.

Cette contrainte a des répercussions notamment d'ordre logistique et économique non négligeables.

En dehors des aspects liés à l'approvisionnement en consommables, le dessalement de l'eau par osmose inverse s'accompagne de la production et du rejet dans le milieu naturel de concentrats.

Ces concentrats, tant lorsqu'ils sont issus de la mise en oeuvre de la première que de la deuxième technique, présentent des concentrations très élevées en sels initialement en présence dans l'eau à traiter. Ceci apparaît dans la colonne de droite du tableau 1 dans laquelle figurent les concentrations des différents sels présents dans ces concentrats. Il peut notamment être constaté que ces concentrats sont particulièrement riches en ions calcium, magnésium et en bicarbonates.

Du fait des fortes concentrations en sels de ces concentrats, leur rejet dans le milieu naturel n'est pas neutre, mais peut au contraire avoir un impact non négligeable sur l'environnement.

Notamment, lors du dessalement de l'eau de mer, ces concentrats sont rejetés dans la mer. Ceci engendre un changement brutal localisé de la salinité de l'eau. Or, il a été observé que si certaines espèces animales ou végétales ne sont pas affectées par ces modifications brutales de leur environnement, d'autres y sont particulièrement sensibles.

### 4. Objectifs de l'invention

L'invention a notamment pour objectif de pallier ces inconvénients de l'art antérieur.

Plus précisément, un objectif de l'invention est de fournir une technique de dessalement d'eau intégrant une phase de reminéralisation de l'eau traitée dont la mise en oeuvre conduise à limiter les approvisionnements en consommables nécessaires à la reminéralisation.

L'invention poursuit également l'objectif de permettre une reminéralisation particulièrement efficace d'une eau dessalée.

Un autre objectif de l'invention est de mettre en oeuvre une telle technique de dessalement dont la mise en oeuvre n'exerce qu'un impact limité sur l'environnement à tout le moins comparativement aux techniques de l'art antérieur.

L'invention a encore pour objectif de fournir une telle technique qui soit simple à mettre en oeuvre et qui soit efficace et économique.

### 5. Exposé de l'invention

Ces objectifs, ainsi que d'autres qui apparaîtront par la suite, sont atteints à l'aide d'un procédé de traitement d'une eau contenant au moins des sels de calcium et/ou de magnésium à travers des membranes de type osmose inverse, ledit procédé comprenant au moins une étape de récupération d'une eau au moins en partie déssalée, une étape de récupération d'un concentrat provenant desdites membranes et contenant des bicarbonates, une étape d'injection de CO₂ ou d'un acide dans ladite eau au moins partiellement déssalée, et une étape de reminéralisation de ladite eau au moins en partie dessalée au sein d'un réacteur de reminéralisation.

Selon l'invention, un tel procédé comprend:
- une étape de décarbonatation dudit concentrat de façon à former des carbonates, et
- une étape de recyclage d'au moins une partie desdits carbonates au sein dudit réacteur de reminéralisation.

L'invention repose sur la mise en oeuvre d'une étape de décarbonatation du concentrat issu du traitement par osmose inverse dans le but de produire des carbonates. Ces carbonates sont ensuite recyclés à l'intérieur du réacteur de reminéralisation dans lequel ils réagissent avec l'eau traitée dans laquelle du CO₂ ou de l'acide a préalablement été injecté de manière à enrichir l'eau traitée en bicarbonates.

La mise en oeuvre de l'invention consiste donc à produire directement sur le site de traitement d'eau le matériau calcaire nécessaire à la reminéralisation de l'eau traitée. Par conséquent, la mise en oeuvre d'un procédé de traitement d'eau selon l'invention permet d'éviter l'approvisionnement en continu du site de production en matériau calcaire consommable.

De plus, le fait de faire subir au concentrat issu du traitement de l'eau par osmose inverse une décarbonatation conduit au rejet dans le milieu naturel d'un surnageant appauvri en bicarbonates. Cet aspect de l'invention permet donc de réduire l'impact sur l'environnement du dessalement.

Selon une caractéristique avantageuse, ladite eau est constituée par de l'eau de mer.

La mise en oeuvre de l'invention permet de dessaler et de reminéraliser efficacement de l'eau de mer de façon à la rendre propre à la consommation ou plus généralement de la rendre exploitable.

Préférentiellement, ladite étape de décarbonatation est de type catalytique.

La décarbonatation catalytique est un procédé qui permet de former de manière efficace des carbonates à partir du concentrat issu de l'osmose inverse de l'eau à traiter.

Dans ce cas, lesdits carbonates formés se présentent préférentiellement sous forme de billes.

La décarbonatation catalytique permet en effet la formation de billes de carbonates enrobant un grain de sable. Ces billes présentent l'avantage de pouvoir être facilement réutilisées en tant que matériau reminéralisant particulièrement efficace.

Selon un aspect avantageux de l'invention, lesdits carbonates formés comprennent du carbonate de calcium (CaCO₃).

Leur utilisation en tant que matériau reminéralisant permet donc d'enrichir l'eau déminéralisée en calcium.

Selon un autre aspect avantageux de l'invention, lesdits carbonates formés comprennent du carbonate de magnésium (MgCO₃).

Leur utilisation en tant que matériau reminéralisant permet donc d'enrichir l'eau déminéralisée en magnésium.

Il peut bien sûr être envisagé que les carbonates produits soient différents de manière à enrichir l'eau traitée en d'autres espèces minérales.

Selon l'invention, ladite étape de décarbonatation est préférentiellement précédée d'une étape d'injection de soude ou de chaux dans ledit concentrat.

Ces réactifs participent activement à la formation des carbonates.

Préférentiellement, ladite chaux ou ladite soude est injectée dans des quantités stoechiométriques par rapport à la quantité de bicarbonates à précipiter avec une marge de 20 à 50%.

Avantageusement, ledit CO₂ ou ledit acide sont injectés dans des proportions stoechiométriques par rapport à la quantité de carbonates à former avec une marge de 20 à 50%.

De telles proportions permettent d'obtenir de bons résultats en termes de formation de carbonates et en termes d'abattement de la concentration en sels du surnageant qui est rejeté dans le milieu naturel.

Un procédé de traitement selon l'invention comprend avantageusement une étape de rejet dans le milieu naturel d'un surnageant provenant de ladite étape de décarbonatation, ledit surnageant étant appauvri en sel.

La mise en oeuvre de l'invention permet donc de limiter l'impact du dessalement de l'eau sur le milieu naturel.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente schématiquement un mode de réalisation d'une installation destinée à la mise en oeuvre d'un procédé de traitement d'eau selon l'invention
- la figure 2 illustre une installation mise en oeuvre lors de la conduite d'essais réalisés dans le cadre de la mise au point de la présente technique.

### 7. Description d'un mode de réalisation de l'invention

### 7.1. Rappel du principe de l'invention

Le principe général de l'invention concerne un procédé de dessalement d'eau par osmose inverse qui inclut une étape de reminéralisation au sein d'un réacteur de l'eau dessalée produite.

L'invention repose sur la mise en oeuvre d'une étape de décarbonatation du concentrat issu du traitement par osmose inverse dans le but de produire des carbonates. Ces carbonates sont ensuite recyclés à l'intérieur du réacteur de reminéralisation dans lequel ils réagissent avec l'eau traitée dans laquelle du CO₂ ou de l'acide a préalablement été injecté de manière à enrichir l'eau traitée en bicarbonates.

La mise en oeuvre de l'invention consiste donc à produire directement sur le site de traitement d'eau le matériau calcaire nécessaire à la reminéralisation de l'eau traitée. Par conséquent, la mise en oeuvre d'un procédé de traitement d'eau selon l'invention permet d'éviter l'approvisionnement en continu du site de production en matériau calcaire consommable.

De plus, le fait de faire subir au concentrat issu du traitement de l'eau par osmose inverse une décarbonatation conduit au rejet dans le milieu naturel d'un surnageant appauvri en bicarbonates. Cet aspect de l'invention permet donc de réduire l'impact sur l'environnement du dessalement.

### 7.2. Exemple d'un mode de réalisation d'une installation pour la mise en oeuvre d'un procédé de traitement d'eau selon l'invention

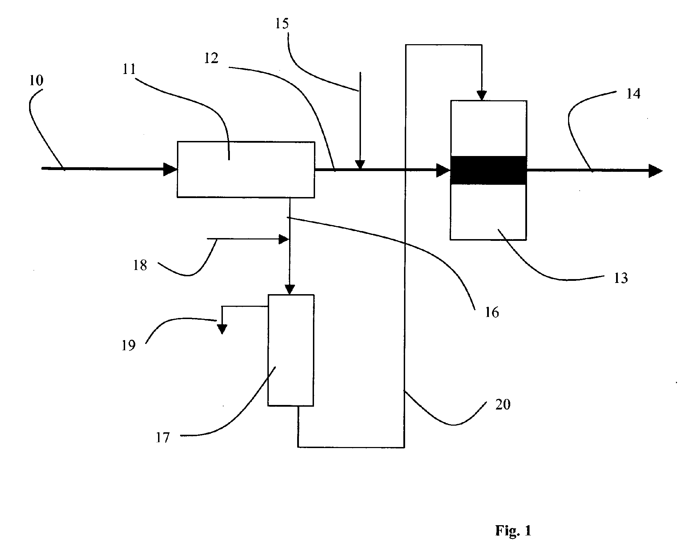

On présente en relation avec la figure 1 une installation destinée à la mise en oeuvre d'un procédé de traitement d'eau selon l'invention.

Ainsi que cela est représenté sur cette figure 1, une telle installation comprend des moyens d'arrivée 10 d'une eau riche en sels, comme une canalisation, dans une unité de filtration par osmose inverse 11.

Cette unité de traitement par osmose inverse 11 est reliée à des moyens d'évacuation 12 d'une eau traitée appauvrie au moins en partie en sels, c'est-à-dire dont les concentrations en sels qu'elle contenait initialement sont réduites. Ces moyens d'évacuation 12 peuvent prendre la forme d'éléments de canalisation.

Les moyens d'évacuation d'une eau traitée 12 présentent une sortie qui débouche dans un réacteur de reminéralisation 13 qui est lui-même relié à une canalisation d'évacuation 14 d'une eau dessalée reminéralisée.

Des moyens d'injection de réactif(s) 15, comme des injecteurs, sont placés sur les moyens d'évacuation d'eau traitée 12 en amont du réacteur de reminéralisation 13.

L'unité de traitement 11 est également reliée à des moyens d'évacuation 16 d'un concentrat issu du traitement par osmose inverse de l'eau à traiter.

Ces moyens d'évacuation 16 d'un concentrat, qui peuvent prendre la forme d'éléments de canalisation, présentent une sortie qui débouche dans un réacteur de décarbonatation 17.

Des moyens d'injection 18 de réactif(s) sont placés sur les moyens d'évacuation 16 du concentrat en amont du réacteur de décarbonatation 17.

Le réacteur de décarbonatation 17 présente des moyens d'évacuation 19 d'un surnageant. Il présente en outre des moyens d'évacuation de carbonates 20. Ces moyens d'évacuation de carbonates 20 présentent une sortie qui est reliée au réacteur de reminéralisation 13.

### 7.3. Exemple d'un procédé de traitement d'eau selon l'invention en vue d'un enrichissement en calcium de l'eau dessalée

Un procédé de traitement d'eau selon l'invention peut par exemple être mis en oeuvre afin d'enrichir en calcium une eau dessalée.

Une eau riche en sels, notamment en calcium, comme par exemple, de l'eau de mer ou tout autre type d'eau, est acheminée et injectée via la canalisation 10 dans l'unité de traitement par osmose inverse 11.

L'eau riche en sels est alors filtrée au sein de cette unité 11 en sorte qu'une eau traitée au moins partiellement appauvrie en certains sels est extraite de l'unité 11 et s'écoule à l'intérieur de la canalisation 12 en direction du réacteur de reminéralisation 13.

Avant que l'eau soit injectée à l'intérieur du réacteur de reminéralisation 13, les moyens d'injection 15 sont mis en oeuvre de façon à y injecter de l'anhydride carbonique (CO₂) ou un acide, comme par exemple de l'acide sulfurique (H₂SO₄) ou de l'acide chlorhydrique (HCl).

Le concentrat issu du traitement par osmose inverse de l'eau riche en sels est évacué de l'unité 11 au moyen de la canalisation 16. Ce concentrat est notamment riche en bicarbonates de calcium (Ca(HCO₃)₂).

Les moyens d'injection 18 sont mis en oeuvre de façon à injecter dans ce concentrat de la chaux (CaO) ou de la soude (NaOH).

Le mélange du concentrat et de la chaux ou de la soude est ensuite déversé à l'intérieur du réacteur de décarbonatation 17 en vue de subir une décarbonatation préférentiellement de type catalytique.

Le principe de la décarbonatation est connu de l'homme du métier. Il pourra ici notamment être mis en oeuvre le procédé de décarbonatation catalytique développé et commercialisé par la demanderesse sous le nom de ACTINA®.

Il se produit alors au sein du réacteur de décarbonatation l'une ou l'autre des réactions suivantes selon que de la chaux ou de la soude a été injectée dans le concentrat :

Ca(OH)₂ + Ca²⁺ + 2HCO₃⁻ → 2CaCO₃↓ + 2H₂O

NaOH + Ca²⁺ + 2HCO₃⁻ → CaCO_{3↓} + H₂O + Na⁺ + HCO₃⁻

Il peut ainsi être observé que la décarbonatation du concentrat conduit à la production de carbonates de calcium (CaCO₃). Les carbonates de calcium ainsi produits constituent un matériau calcaire qui se présente avantageusement sous la forme de billes.

Un surnageant produit au cours de la décarbonatation du concentrat est évacué du réacteur de décarbonatation 17 vers le milieu naturel via la canalisation 19. Ce surnageant est appauvri en bicarbonates comparativement au concentrat en sorte que son rejet dans le milieu naturel a un impact plus faible que celui du rejet direct du concentrat, comme cela est le cas dans les techniques de l'art antérieur.

Les carbonates de calcium produits au cours de la décarbonatation du concentrat sont dirigés vers le réacteur de reminéralisation 13 en vue d'y être injectés au moyen de la canalisation 20.

Il se produit alors au sein du réacteur de reminéralisation 13 l'une des réactions suivantes selon le type de réactif injecté préalablement dans l'eau traitée.

L'injection d'anhydride carbonique (CO₂) dans l'eau engendre la réaction suivante :

CaCO₃ + CO₂ + H₂O → Ca(HCO₃)₂

L'injection d'acide sulfurique (H₂SO₄) dans l'eau engendre la réaction suivante :

2CaCO₃ + H₂SO₄ → Ca(HCO₃)₂ + CaSO₄

L'injection d'acide chlorhydrique (HCl) dans l'eau engendre la réaction suivante :

2CaCO₃ + 2HCl → Ca(HCO₃)₂ + CaCl₂

La mise en oeuvre de l'invention permet donc, dans le cadre de ce mode de réalisation, d'enrichir l'eau dessalée en calcium tout en prévenant l'achat et l'approvisionnement en matériau calcaire consommable dans la mesure où celui-ci est fabriqué directement sur le site de production en recyclant et en retraitant les résidus issus du dessalement de l'eau.

### 7.4. Exemple d'un procédé de traitement d'eau selon l'invention en vue d'un enrichissement en magnésium de l'eau traitée

De la même manière que cela vient d'être décrit, un procédé de traitement d'eau selon l'invention peut par exemple être mis en oeuvre afin d'enrichir en magnésium une eau dessalée.

Pour cela, une eau riche en sels, notamment en magnésium, comme par exemple de l'eau de mer ou tout autre type d'eau, est acheminée et injectée via la canalisation 10 dans l'unité de traitement par osmose inverse 11.

L'eau riche en sels est alors filtrée au sein de cette unité 11 en sorte qu'une eau traitée au moins partiellement appauvrie en certains sels est extraite de l'unité 11 et s'écoule à l'intérieur de la canalisation 12 en direction du réacteur de reminéralisation 13.

Avant que l'eau soit injectée à l'intérieur du réacteur de reminéralisation 13, les moyens d'injection 15 sont mis en oeuvre de façon à y injecter de l'anhydride carbonique (CO₂) ou un acide, comme par exemple de l'acide sulfurique (H₂SO₄) ou de l'acide chlorhydrique (HCl).

Le concentrat issu du traitement par osmose inverse de l'eau riche en sels est évacué de l'unité 11 au moyen de la canalisation 16. Ce concentrat est notamment riche en bicarbonates de magnésium (Mg(HCO₃)₂).

Les moyens d'injection 18 sont mis en oeuvre de façon à injecter dans ce concentrat de la chaux (CaO) ou de la soude (NaOH).

Le mélange du concentrat et de la chaux ou de la soude est ensuite déversé à l'intérieur du réacteur de décarbonatation 17 en vue de subir une décarbonatation préférentiellement de type catalytique. Il se produit alors au sein du réacteur de décarbonatation l'une ou l'autre des réactions suivantes selon que de la chaux ou de la soude a été injectée dans le concentrat :

Mg(OH)₂ + Mg²⁺ + 2HCO₃⁻ → 2MgCO_{3↓} + 2H₂O

NaOH + Mg²⁺ + 2HCO₃⁻ → MgCO_{3↓} + H₂O + Na⁺ + HCO₃⁻

Il peut ainsi être observé que la décarbonatation du concentrat conduit à la production de carbonates de magnésium (MgCO₃). Les carbonates de magnésium ainsi produits constituent un matériau calcaire qui se présente avantageusement sous la forme de billes.

Un surnageant produit au cours de la décarbonatation du concentrat est évacué du réacteur de décarbonatation 17 vers le milieu naturel via la canalisation 19. Ce surnageant est appauvri en bicarbonates comparativement au concentrat en sorte que son rejet dans le milieu naturel a un impact plus faible que celui du rejet direct du concentrat, comme cela est le cas dans les techniques de l'art antérieur.

Les carbonates de magnésium produits au cours de la décarbonatation du concentrat sont dirigés vers le réacteur de reminéralisation 13 en vue d'y être injectés au moyen de la canalisation 20.

Il se produit alors au sein du réacteur de reminéralisation 13 l'une des réactions suivantes selon le type de réactif injecté préalablement dans l'eau traitée.

L'injection d'anhydride carbonique (CO₂ dans l'eau engendre la réaction suivante :

MgCO₃ + CO₂ + H₂O → Mg(HCO₃)₂

L'injection d'acide sulfurique (H₂SO₄) dans l'eau engendre la réaction suivante :

2MgCO₃ + H₂SO₄ → Mg(HCO₃)₂ + MgSO₄

L'injection d'acide chlorhydrique (HCl) dans l'eau engendre la réaction suivante :

2MgCO₃ + 2HCl → Mg(HCO₃)₂ + MgCl₂

La mise en oeuvre de l'invention permet donc, dans le cadre de ce mode de réalisation, d'enrichir l'eau dessalée en magnésium tout en prévenant l'achat et l'approvisionnement en matériau calcaire consommable dans la mesure où celui-ci est fabriqué directement sur le site de production en recyclant et en retraitant les résidus issus du dessalement de l'eau.

### 7.5. Essais

Plusieurs séries d'essais ont été menées de façon à attester de l'efficacité d'un procédé de traitement d'eau selon l'invention, et en particulier de façon à comparer les résultats d'une reminéralisation au moyen de matériaux calcaires classiques et au moyen des billes de matériau calcaire produites par la mise en oeuvre de l'invention.

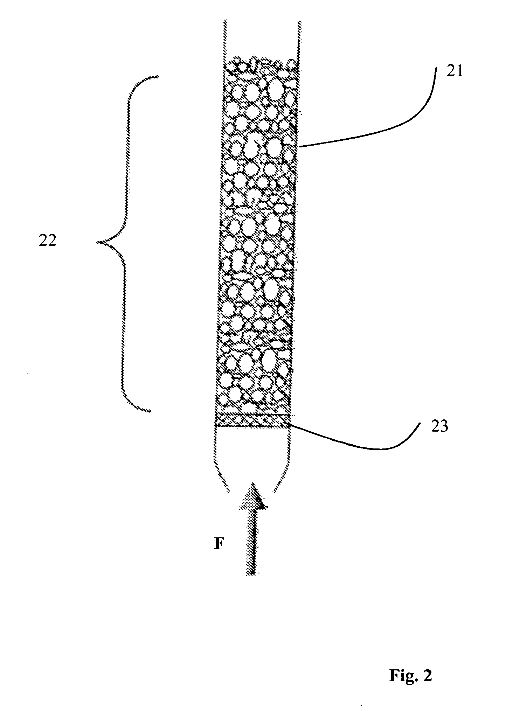

Le protocole expérimental adopté au cours de ces essais est décrit en référence à la figure 2 qui illustre une installation mise en oeuvre à cet effet.

Une première série d'essais a consisté à faire circuler un flux ascendant F d'une solution d'acide sulfurique dans une colonne cylindrique creuse 21 présentant un diamètre de 3 cm et contenant un lit de matériau calcaire 22, préalablement lavé pour en éliminer les fines particules, reposant sur un support en verre fritté 23.

La solution d'acide sulfurique utilisée présentait une concentration égale à 200 mg/L et circulait à un débit de 6 ml/min.

Le lit de calcaire 22 présentait une hauteur de 24 cm soit un volume de 170 cm³. Trois types de calcaire ont été alternativement utilisés : du calcaire d'Israël, du calcaire pyrénéen, et des billes de calcaire produites par la mise en oeuvre du procédé de traitement selon l'invention.

Pour chacun des calcaires utilisés alternativement, 300 ml de solution ont été prélevés après un temps de fonctionnement de 1 heure et 30 minutes en vue de réaliser diverses mesures.

Une deuxième série d'essais a été réalisée. Ces essais étaient identiques à ceux réalisés dans le cadre de la première série mise à part le fait que la solution d'acide sulfurique utilisée contenait 1% d'eau de mer.

Les résultats des mesures réalisées dans le cadre de ces première et deuxième séries d'essais sont respectivement placés dans les tableaux 3 et 4.

**Tableau 3 : résultats première série d'essais**

| ESSAIS n°1 (sans ajout d'eau de mer) | | | |
|---|---|---|---|
| | Calcaire d'Israël | Calcaire pyrénéen | Billes |
| Température T(°C) | 20,3 | 20,3 | 20,3 |
| Conductivité (µS/cm) | 545 | 499 | 880 |
| pH | 7,34 | 7,26 | 7,42 |
| Titre alcalimétrique simple TA | 0 | 0 | 0 |
| Titre alcalimétrique complet TAC °F | 18,0 | 12,5 | 15,1 |
| Titre hydrométrique THca °F | 26,8 | 25,2 | 42,7 |
| Titre hydrométrique total THtotal °F | 29,5 | 27,7 | 51,1 |
| THMg (par différence) | 2,7 | 2,5 | 8,4 |

**Tableau 4 : résultats deuxième série d'essais**

| ESSAIS n°2 (avec ajout d'eau de mer) | | | |
|---|---|---|---|
| | Calcaire d'Israël | Calcaire pyrénéen | Billes |
| Température T(°C) | 19,7 | 19,7 | 19,7 |
| Conductivité (µS/cm) | 1158 | 1196 | 1770 |
| pH | 7,35 | 7,34 | 7,64 |
| Titre alcalimétrique simple TA | 0 | 0 | 0 |
| Titre alcalimétrique complet TAC °F | 13,0 | 13,5 | 17,0 |
| Titre hydrométrique THca °F | 30,7 | 32,2 | 49,3 |
| Titre hydrométrique total THtotal °F | 37,1 | 38,1 | 65,0 |
| THMg (par différence) | 6,4 | 5,9 | 15,7 |

Ces essais ont permis de mettre en évidence le fait que la reminéralisation est plus importante en utilisant des billes obtenues par la mise en oeuvre d'un procédé selon l'invention que par l'utilisation de calcaire d'Israël ou de calcaire pyrénéen.

En effet, il apparaît que le titre hydrotimétrique total (THTotal) de la solution prélevée dans le cadre de la première série après traitement avec des billes de calcaire était de l'ordre de 50°F alors qu'il était inférieur à 30°F après traitement avec un calcaire classique.

De même, il apparaît que le titre hydrotimétrique total (THTotal) de la solution prélevée dans le cadre de la deuxième série après traitement avec des billes de calcaire était de l'ordre de 65°F alors qu'il était inférieur à 40°F après traitement avec un calcaire classique.

Il peut également être observé que la reminéralisation est plus importante en présence d'eau de mer.

Il peut être noté en conclusion que les billes de calcaire obtenues par la mise en oeuvre d'un procédé selon l'invention ont un pouvoir reminéralisant plus élevé qu'un calcaire classique.

### 7.6. Avantages

La mise en oeuvre d'un procédé selon l'invention procure de nombreux avantages.

Notamment, l'invention permet la production directement sur le site de production de l'eau dessalée, du matériau calcaire nécessaire à sa reminéralisation. La mise en oeuvre de l'invention conduit donc à éviter l'achat d'un tel consommable et son approvisionnement en continu ce qui à un impact direct positif sur le coût d'exploitation des filières de dessalement de l'eau.

En outre, le matériau calcaire produit sur site est obtenu par traitement et recyclage du concentrat, c'est-à-dire en revalorisant le concentrat issu du dessalement de l'eau par osmose inverse. Ce matériau calcaire est donc produit à moindres frais du fait qu'il est produit à partir de résidus du dessalement de l'eau salée directement disponibles sur le site.

On note également que le pouvoir reminéralisant du matériau calcaire obtenu par la mise en oeuvre de l'invention est supérieur à celui d'un calcaire classique. La présente invention présente ainsi également l'avantage de permettre une reminéralisation plus efficace de l'eau dessalée que les techniques de l'art antérieur.

Par ailleurs, le retraitement de ces concentrats conduit au rejet dans le milieu naturel d'un surnageant appauvri en carbonates et présentant en conséquence des concentrations en sels plus faibles que celles du concentrat lui-même. En d'autres termes, son rejet dans le milieu naturel à un impact moins important que le rejet des concentrats riches en sels produits selon les techniques de l'art antérieur.

## Revendications

1. Procédé de traitement d'une eau contenant au moins des sels de calcium et/ou de magnésium à travers des membranes de type osmose inverse, ledit procédé comprenant au moins une étape de récupération d'une eau au moins en partie déssalée, une étape de récupération d'un concentrat provenant desdites membranes et contenant des bicarbonates, une étape d'injection de CO₂ ou d'un acide dans ladite eau au moins partiellement dessalée, et une étape de reminéralisation de ladite eau au moins en partie dessalée au sein d'un réacteur de reminéralisation,
**caractérisé en ce que** ledit procédé comprend :
- une étape de décarbonatation dudit concentrat de façon à former des carbonates, et
- une étape de recyclage d'au moins une partie desdits carbonates au sein dudit réacteur de reminéralisation.

2. Procédé de traitement selon la revendication 1, **caractérisé en ce que** ladite eau est constituée par de l'eau de mer.

3. Procédé de traitement selon l'une quelconque des revendications 1 ou 2, **caractérisé en ce que** ladite étape de décarbonatation est de type catalytique.

4. Procédé de traitement selon l'une quelconque des revendications 1 à 3, **caractérisé en ce que** lesdits carbonates formés se présentent sous forme de billes.

5. Procédé de traitement selon l'une quelconque des revendications 1 à 4, **caractérisé en ce que** lesdits carbonates formés comprennent du carbonate de calcium (CaCO₃).

6. Procédé de traitement selon l'une quelconque des revendications 1 à 4, **caractérisé en ce que** lesdits carbonates formés comprennent du carbonate de magnésium (MgCO₃).

7. Procédé de traitement selon l'une quelconque des revendications 1 à 7, **caractérisé en ce que** ladite étape de décarbonatation est précédée d'une étape d'injection de soude ou de chaux dans ledit concentrat.

8. Procédé de traitement selon la revendication 7, **caractérisé en ce que** ladite chaux ou ladite soude est injectée dans des quantités stoechiométriques par rapport à la quantité de bicarbonates à précipiter avec une marge de 20 à 50%.

9. Procédé de traitement selon l'une quelconque des revendications 1 à 8, **caractérisé en ce que** ledit CO₂ ou ledit acide sont injectés dans des proportions stoechiométriques par rapport à la quantité de carbonates à former avec une marge de 20 à 50%.

10. Procédé de traitement selon l'une quelconque des revendications 1 à 9, **caractérisé en ce qu'**il comprend une étape de rejet dans le milieu naturel d'un surnageant provenant de ladite étape de décarbonatation, ledit surnageant étant appauvri en sel.

## Claims

1. A method of treating water containing at least calcium salts and/or magnesium salts through reverse osmosis type membranes, said method comprising at least a step of recovering at least partially desalinated water, a step of recovering a concentrate originating from said membranes and containing bicarbonates, a step of injecting CO₂ or an acid into said at least partially desalinated water and a step of remineralising said at least partially desalinated water within a remineralisation reactor,
**characterised in that** said method comprises:
- a step of decarbonating said concentrate so as to form carbonates, and
- a step of recycling at least a portion of said carbonates within said remineralisation reactor.

2. The treatment method according to claim 1, **characterised in that** said water is constituted by sea water.

3. The treatment method according to any one of claims 1 or 2, **characterised in that** said decarbonation step is of the catalytic type.

4. The treatment method according to any one of claims 1 to 3, **characterised in that** said carbonates formed are in the form of beads.

5. The treatment method according to any one of claims 1 to 4, **characterised in that** said carbonates formed comprise calcium carbonate (CaCO₃).

6. The treatment method according to any one of claims 1 to 4, **characterised in that** said carbonates formed comprise magnesium carbonate (MgCO₃).

7. The treatment method according to any one of claims 1 to 7, **characterised in that** said decarbonation step is preceded by a step of injecting soda or lime into said concentrate.

8. The treatment method according to claim 7, **characterised in that** said lime or soda is injected in stoichiometric quantities relative to the quantity of bicarbonates to be precipitated with a margin of 20 to 50%.

9. The treatment method according to any one of claims 1 to 8, **characterised in that** said CO₂ or said acid is injected in stoichiometric proportions relative to the quantity of carbonates to be formed with a margin of 20 to 50%.

10. The treatment method according to any one of claims 1 to 9, **characterised in that** it comprises a step of discharge into the natural environment of a supernatant originating from said decarbonation step, said supernatant being depleted in salt.

## Patentansprüche

1. Verfahren zur Behandlung eines Wassers, das mindestens Calcium- und/oder Magnesiumsalze enthält, mittels Membranen des Umkehrosmosetyps, wobei das Verfahren mindestens einen Schritt der Gewinnung eines teilweise entsalzten Wassers, einen Schritt der Gewinnung eines Konzentrats, welches aus den Membranen stammt und Hydrogencarbonate enthält, einen Schritt des Einleitens von CO₂ oder einer Säure in das mindestens teilweise entsalzte Wasser, und einen Schritt der Remineralisierung des mindestens teilweise entsalzten Wassers in einem Remineralisierungsreaktor umfasst,
**dadurch gekennzeichnet, dass** das Verfahren Folgendes umfasst:
- einen Schritt der Carbonatentfernung aus Konzentrat, derart, dass Carbonate gebildet werden, und
- einen Schritt des Rückführens mindestens eines Teils der Carbonate in den Remineralisierungsreaktor.

2. Behandlungsverfahren nach Anspruch 1, **dadurch gekennzeichnet, dass** das Wasser aus Meerwasser besteht.

3. Behandlungsverfahren nach einem beliebigen der Ansprüche 1 oder 2, **dadurch gekennzeichnet, dass** der Schritt der Carbonatentfernung katalytischer Art ist.

4. Behandlungsverfahren nach einem beliebigen der Ansprüche 1 bis 3, **dadurch gekennzeichnet, dass** die gebildeten Carbonate in Form von Kügelchen vorliegen.

5. Behandlungsverfahren nach einem beliebigen der Ansprüche 1 bis 4, **dadurch gekennzeichnet, dass** die gebildeten Carbonate Calciumcarbonat (CaCO₃) umfassen.

6. Behandlungsverfahren nach einem beliebigen der Ansprüche 1 bis 4, **dadurch gekennzeichnet, dass** die gebildeten Carbonate Magnesiumcarbonat (MgCO₃) umfassen.

7. Behandlungsverfahren nach einem beliebigen der Ansprüche 1 bis 7, **dadurch gekennzeichnet, dass** dem Schritt der Carbonatentfernung ein Schritt des Einleitens von Natron oder Kalk in das Konzentrat vorangeht.

8. Behandlungsverfahren nach Anspruch 7, **dadurch gekennzeichnet, dass** das Natron oder der Kalk im Verhältnis zu der zu fällenden Menge an Hydrogencarbonaten in stöchiometrischen Mengen mit einem Spielraum von 20 bis 50 % eingeleitet werden.

9. Behandlungsverfahren nach einem beliebigen der Ansprüche 1 bis 8, **dadurch gekennzeichnet, dass** das CO₂ oder die Säure im Verhältnis zu der zu bildenden Menge an Carbonaten in stöchiometrischen Anteilen mit einem Spielraum von 20 bis 50 % eingeleitet werden.

10. Behandlungsverfahren nach einem beliebigen der Ansprüche 1 bis 9, **dadurch gekennzeichnet, dass** es einen Schritt umfasst, bei welchem ein Überstand, der aus dem Schritt der Carbonatentfernung stammt, wieder in die natürliche Umgebung eingeleitet wird, wobei der Überstand an Salz verarmt ist.
